# EUROPEAN PATENT APPLICATION

(11) **EP 4 412 234 A1**
(43) Date of publication of application: **07.08.2024**
(21) Application number: 22897367.3
(22) Date of filing: 27.09.2022
(51) Int. Cl.: H04N 23/70

(54) **IMAGE PROCESSING METHOD, MODEL TRAINING METHOD AND ELECTRONIC DEVICE**

(30) Priority: 25.11.2021 CN 202111414609
(71) Applicant: Huawei Technologies Co., Ltd., Shenzhen, Guangdong 518129 (CN)
(72) Inventor: PENG, Huanwen, Shenzhen, Guangdong 518129 (CN); WEN, Jinsong, Shenzhen, Guangdong 518129 (CN); JIA, Yanbing, Shenzhen, Guangdong 518129 (CN); ZHOU, Wei, Shenzhen, Guangdong 518129 (CN); WEI, Zhe, Shenzhen, Guangdong 518129 (CN); HE, Zili, Shenzhen, Guangdong 518129 (CN)
(74) Representative: Epping - Hermann - Fischer
(86) International application number: PCT/CN2022/121828
(87) International publication number: WO 2023/093281

(57) **Abstract**

Embodiments of this application provide an image processing method, a model training method, and an electronic device. The image processing method includes: shooting a first image and a second image for a motion scene in an alternating current lighting environment, where exposure duration of the first image is greater than exposure duration of the second image, and the exposure duration of the second image is less than an energy period of an alternating current; and inputting the first image and the second image to a trained image processing model, and outputting a target image by using the image processing model. In this way, an image without a stripe can be obtained through shooting for the motion scene in the alternating current lighting environment.

## Description

This application claims priority to Chinese Patent Application No. 202111414609.X, filed with the China National Intellectual Property Administration on November 25, 2021 and entitled "IMAGE PROCESSING METHOD, MODEL TRAINING METHOD, AND ELECTRONIC DEVICE", which is incorporated herein by reference in its entirety.

### TECHNICAL FIELD

Embodiments of this application relate to the field of data processing technologies, and in particular, to an image processing method, a model training method, and an electronic device.

### BACKGROUND

An alternating current lighting environment is a shooting environment with a high frequency. When an image is shot in the alternating current lighting environment, if exposure duration of a camera is less than an energy period of an alternating current, a banding (banding) phenomenon occurs, in other words, the shot image has alternating bright and dark stripes.

### SUMMARY

To resolve the foregoing technical problem, this application provides an image processing method, a model training method, and an electronic device. In the image processing method, an image shot for a motion scene in an alternating current lighting environment can be processed to obtain an image without a stripe.

According to a first aspect, an embodiment of this application provides an image processing method. The method includes: shooting a first image and a second image for a motion scene in an alternating current lighting environment, where exposure duration of the first image is greater than exposure duration of the second image, and the exposure duration of the second image is less than an energy period of an alternating current; and inputting the first image and the second image to a trained image processing model, and outputting a target image by using the image processing model. In this way, an image without a stripe can be obtained through shooting for the motion scene in the alternating current lighting environment.

In addition, a low-luminance region in the second image is underexposed and details are lost, and a high-luminance region in the second image has details. A high-luminance region in the first image is overexposed and details are lost, and a low-luminance region in the first image has details. The low-luminance region in the first image and the high-luminance region in the second image may be fused by using the trained image processing model, so that each region of the target image obtained through fusion has details, and a dynamic luminance range (in other words, a bright-dark difference of the image) of the target image can be extended.

For example, the motion scene is a scene in which a relative moving speed between a shot object and an image capture device is greater than a relative moving speed threshold.

For example, the first image and the second image each may be one of a RAW (unprocessed) image, an RGB (Red Green Blue, red green blue) image, and a YUV ("Y" indicates luminance (Luminance, Luma), "U" and "V" indicate chrominance (Chrominance, Chroma)) image.

For example, the first image may be an image that does not meet a definition condition. For example, the definition condition may be that an edge width of the shot object is less than or equal to a preset width threshold. The preset width threshold may be set based on a requirement, for example, three pixels. This is not limited in this application.

For example, an edge width of only a moving shot object in the first image is greater than the preset width threshold, and an edge width of a static shot object in the first image is less than or equal to the preset width threshold.

For example, edge widths of all shot objects in the first image are greater than the preset width threshold.

According to the first aspect, the method further includes: detecting a moving speed of the shot object and a shaking speed of the image capture device; and detecting, based on the moving speed and the shaking speed, whether a current shooting scene is the motion scene.

For example, when it is determined, based on the moving speed of the shot object and the shaking speed of the image capture device, that the relative moving speed between the shot object and the image capture device is greater than the relative moving speed threshold, it may be determined that the current shooting scene is the motion scene.

For example, when it is determined, based on the moving speed of the shot object and the shaking speed of the image capture device, that the relative moving speed between the shot object and the image capture device is less than or equal to the relative moving speed threshold, it may be determined that the current shooting scene is not the motion scene.

According to the first aspect or any implementation of the first aspect, the shooting a first image and a second image for a motion scene includes: When it is determined, based on the moving speed and the shaking speed, that the relative moving speed between the shot object and the image capture device is less than or equal to the preset relative moving speed, for the motion scene, shooting the first image based on first preset exposure duration and shooting the second image based on second preset exposure duration. The first preset exposure duration is N1 times the energy period of the alternating current, the second preset exposure duration is M1 times the energy cycle, N1 is a positive integer, and M1 is a decimal between 0 and 1. In this way, the shot first image has no stripe, and the shot second image has a stripe.

According to the first aspect or any implementation of the first aspect, the shooting a first image and a second image for a motion scene includes: When it is determined, based on the moving speed and the shaking speed, that the relative moving speed between the shot object and the image capture device is less than or equal to the preset relative moving speed, for the motion scene, shooting the first image based on third preset exposure duration and shooting the second image based on fourth preset exposure duration. The third preset exposure duration is N2 times the energy period of the alternating current, the fourth preset exposure duration is M2 times the energy cycle, N2 is a decimal greater than 1, and M2 is a decimal between 0 and 1. In this way, the shot first image has a stripe, and the second image also has a stripe.

According to the first aspect or any implementation of the first aspect, the shooting a first image and a second image for a motion scene includes: When it is determined, based on the moving speed and the shaking speed, that the relative moving speed between the shot object and the image capture device is greater than the preset relative moving speed, for the motion scene, shooting the first image based on fifth preset exposure duration and shooting the second image based on sixth preset exposure duration. The fifth preset exposure duration is N3 times the energy period of the alternating current, the sixth preset exposure duration is M3 times the energy cycle, N3 and M3 are decimals between 0 and 1, and N3 is greater than M3. In this way, the shot first image has a stripe, and the second image also has a stripe.

According to the first aspect or any implementation of the first aspect, the image processing model is obtained through training based on a first training image and a second training image, the second training image has a stripe, and luminance of the first training image is greater than luminance of the second training image. In this way, the image processing model may be used to process the first image shot based on the first preset exposure duration and the second image shot based on the second preset exposure duration, to obtain the target image without a stripe.

For example, the image processing model is a first image processing model.

According to the first aspect or any implementation of the first aspect, the method further includes: obtaining a video sequence, where the video sequence is obtained through shooting for the motion scene, the video sequence includes an image obtained through high dynamic range imaging, and the image in the video sequence has no stripe; selecting a frame of image from the video sequence as a label image; performing frame interpolation on the video sequence, and selecting, based on the label image, K frames of images from the interpolated video sequence for fusion, to obtain the first training image; and selecting a frame of image from the interpolated video sequence as a base image, reducing luminance of the base image, and adding a stripe to the base image whose luminance is reduced, to obtain the second training image. In this way, the first training image and the second training image may be obtained.

According to the first aspect or any implementation of the first aspect, the image processing model is trained based on the first training image and the second training image, both the first training image and the second training image have stripes, stripe intensity of the first training image is less than stripe intensity of the second training image, and the luminance of the first training image is greater than the luminance of the second training image. In this way, the image processing model may be used to process the first image shot based on the third preset exposure duration and the second image shot based on the fourth preset exposure duration, or process the first image shot based on the fifth preset exposure duration and the second image shot based on the sixth preset exposure duration, to obtain the target image without a stripe.

For example, the image processing model is a second image processing model.

According to the first aspect or any implementation of the first aspect, the method further includes: obtaining a video sequence, where the video sequence is obtained through shooting for the motion scene, the video sequence includes an image obtained through high dynamic range imaging, and the image in the video sequence has no stripe; selecting a frame of image from the video sequence as a label image; performing frame interpolation on the video sequence, and selecting, based on the label image, K frames of images from the interpolated video sequence for fusion, and adding a stripe that meets a week stripe condition to a fused image, to obtain the first training image; and selecting a frame of image from the interpolated video sequence as a base image, reducing luminance of the base image, and adding a stripe that meets a strong stripe condition to the base image whose luminance is reduced, to obtain the second training image. In this way, the first training image and the second training image may be obtained.

According to the first aspect or any implementation of the first aspect, the first image and the second image are images shot by a same image capture device, and a shooting time interval between the first image and the second image is less than preset duration. Alternatively, the first image and the second image are images shot by different image capture devices, and shooting start time of the first image and shooting start time of the second image are the same.

For example, the first image and the second image are two consecutive frames of images shot by a same image capture device.

According to a second aspect, an embodiment of this application provides a model training method. The method includes generating training data. The training data includes a first training image, a second training image, and a label image, the second training image has a stripe, and luminance of the first training image is greater than luminance of the second training image. Then, the training data is input to an image processing model, and the image processing model performs forward calculation on the first training image and the second training image in the training data, and outputs a fused image. Subsequently, a loss function value is calculated based on the fused image and the label image in the training data, and a model parameter of the image processing model is adjusted based on the loss function value. In this way, the image processing model can learn a stripe removal capability and an image fusion capability.

According to the second aspect, the generating training data includes: first, obtaining a video sequence. The video sequence is obtained through shooting for a motion scene, the video sequence includes an image obtained through high dynamic range imaging, and the image in the video sequence has no stripe. Then, a frame of image is selected from the video sequence as the label image. Then, frame interpolation is performed on the video sequence, and K frames of images are selected from the interpolated video sequence based on the label image for fusion, to obtain the first training image. Then, a frame of image is selected from the interpolated video sequence as a base image, luminance of the base image is reduced, and a stripe is added to the base image whose luminance is reduced, to obtain the second training image. In this way, the first training image that does not meet a definition condition and without a stripe, the second training image that meets the definition condition and with a stripe, and the label image that is clear and without a stripe can be generated.

According to the second aspect or any implementation of the second aspect, the generating training data includes: first, obtaining a video sequence. The video sequence is obtained through shooting for a motion scene, the video sequence includes an image obtained through high dynamic range imaging, and the image in the video sequence has no stripe. Then, a frame of image is selected from the video sequence as the label image. Then, frame interpolation is performed on the video sequence, K frames of images are selected from the interpolated video sequence based on the label image for fusion, and a stripe that meets a weak stripe condition is added to an image obtained through fusion, to obtain the first training image. Then, a frame of image is selected from the interpolated video sequence as a base image, luminance of the base image is reduced, and a stripe that meets a strong stripe condition is added to the base image whose luminance is reduced, to obtain the second training image. In this way, the first training image that does not meet a definition condition and with a stripe, the second training image that meets the definition condition and with a stripe, and the label image that is clear and without a stripe can be generated.

According to the second aspect or any implementation of the second aspect,
the weak stripe condition includes: stripe intensity is less than an intensity threshold; and
the strong stripe condition includes: the stripe intensity is greater than or equal to the intensity threshold.

According to a third aspect, an embodiment of this application provides an image capture device. The image capture device can perform the image processing method according to the first aspect or any possible implementation of the first aspect.

The third aspect and any implementation of the third aspect respectively correspond to the first aspect and any implementation of the first aspect. For technical effect corresponding to the third aspect and any implementation of the third aspect, refer to technical effect corresponding to the first aspect and any implementation of the first aspect. Details are not described herein again. According to a fourth aspect, an embodiment of this application provides an electronic device, including a memory and a processor. The memory is coupled to the processor. The memory stores program instructions. When the program instructions are executed by the processor, the electronic device is enabled to perform the image processing method according to the first aspect or any possible implementation of the first aspect.

The fourth aspect and any implementation of the fourth aspect respectively correspond to the first aspect and any implementation of the first aspect. For technical effect corresponding to the fourth aspect and any implementation of the fourth aspect, refer to technical effect corresponding to the first aspect and any implementation of the first aspect. Details are not described herein again. According to a fifth aspect, an embodiment of this application provides an electronic device, including a memory and a processor. The memory is coupled to the processor. The memory stores program instructions. When the program instructions are executed by the processor, the electronic device is enabled to perform the model training method according to the second aspect or any possible implementation of the second aspect.

The fifth aspect and any implementation of the fifth aspect respectively correspond to the second aspect and any implementation of the second aspect. For technical effect corresponding to the fifth aspect and any implementation of the fifth aspect, refer to technical effect corresponding to the second aspect and any implementation of the second aspect. Details are not described herein again. According to a sixth aspect, an embodiment of this application provides a chip, including one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the image processing method according to the first aspect or any possible implementation of the first aspect.

The sixth aspect and any implementation of the sixth aspect respectively correspond to the first aspect and any implementation of the first aspect. For technical effect corresponding to the sixth aspect and any implementation of the sixth aspect, refer to technical effect corresponding to the first aspect and any implementation of the first aspect. Details are not described herein again. According to a seventh aspect, an embodiment of this application provides a chip, including one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the model training method according to the second aspect or any possible implementation of the second aspect.

The seventh aspect and any implementation of the seventh aspect respectively correspond to the second aspect and any implementation of the second aspect. For technical effect corresponding to the seventh aspect and any implementation of the seventh aspect, refer to technical effect corresponding to the second aspect and any implementation of the second aspect. Details are not described herein again.

According to an eighth aspect, an embodiment of this application provides a computer storage medium. The computer-readable storage medium stores a computer program. When the computer program is run on a computer or a processor, the computer or the processor is enabled to perform the image processing method according to the first aspect or any possible implementation of the first aspect.

The eighth aspect and any implementation of the eighth aspect respectively correspond to the first aspect and any implementation of the first aspect. For technical effect corresponding to the eighth aspect and any implementation of the eighth aspect, refer to technical effect corresponding to the first aspect and any implementation of the first aspect. Details are not described herein again.

According to a ninth aspect, an embodiment of this application provides a computer storage medium. The computer-readable storage medium stores a computer program. When the computer program is run on a computer or a processor, the computer or the processor is enabled to perform the model training method according to the second aspect or any possible implementation of the second aspect.

The ninth aspect and any implementation of the ninth aspect respectively correspond to the second aspect and any implementation of the second aspect. For technical effect corresponding to the ninth aspect and any implementation of the ninth aspect, refer to technical effect corresponding to the second aspect and any implementation of the second aspect. Details are not described herein again. According to a tenth aspect, an embodiment of this application provides a computer program product. The computer program product includes a software program. When the software program is executed by a computer or a processor, steps in the image processing method according to the first aspect or any possible implementation of the first aspect are performed.

The tenth aspect and any implementation of the tenth aspect respectively correspond to the first aspect and any implementation of the first aspect. For technical effect corresponding to the tenth aspect and any implementation of the tenth aspect, refer to technical effect corresponding to the first aspect and any implementation of the first aspect. Details are not described herein again. According to an eleventh aspect, an embodiment of this application provides a computer program product. The computer program product includes a software program. When the software program is executed by a computer or a processor, steps in the model training method according to the second aspect or any possible implementation of the second aspect are performed.

The eleventh aspect and any implementation of the eleventh aspect respectively correspond to the second aspect and any implementation of the second aspect. For technical effect corresponding to the eleventh aspect and any implementation of the eleventh aspect, refer to technical effect corresponding to the second aspect and any implementation of the second aspect. Details are not described herein again.

### BRIEF DESCRIPTION OF DRAWINGS

FIG. 1 is a schematic diagram of an example of an application scenario;
FIG. 2 is a schematic diagram of an example of an application scenario;
FIG. 3 is a schematic diagram of an example of a training process;
FIG. 4 is a schematic diagram of an example of a data generation process;
FIG. 5 is a schematic diagram of an example of a training process;
FIG. 6 is a schematic diagram of an example of a data generation process;
FIG. 7 is a schematic diagram of an example of a processing flow;
FIG. 8 is a schematic diagram of an example of an image processing flow;
FIG. 9a is a schematic diagram of an example of an image processing process;
FIG. 9b is a schematic diagram of an example of an image processing process;
FIG. 9c is a schematic diagram of an example of an image processing process;
FIG. 9d is a schematic diagram of an example of an image processing process; and
FIG. 10 is a schematic diagram of an example of a structure of an apparatus.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

In descriptions of embodiments of this application, unless otherwise stated, "a plurality of" means two or more than two. For example, a plurality of processing units are two or more processing units, and a plurality of systems are two or more systems.

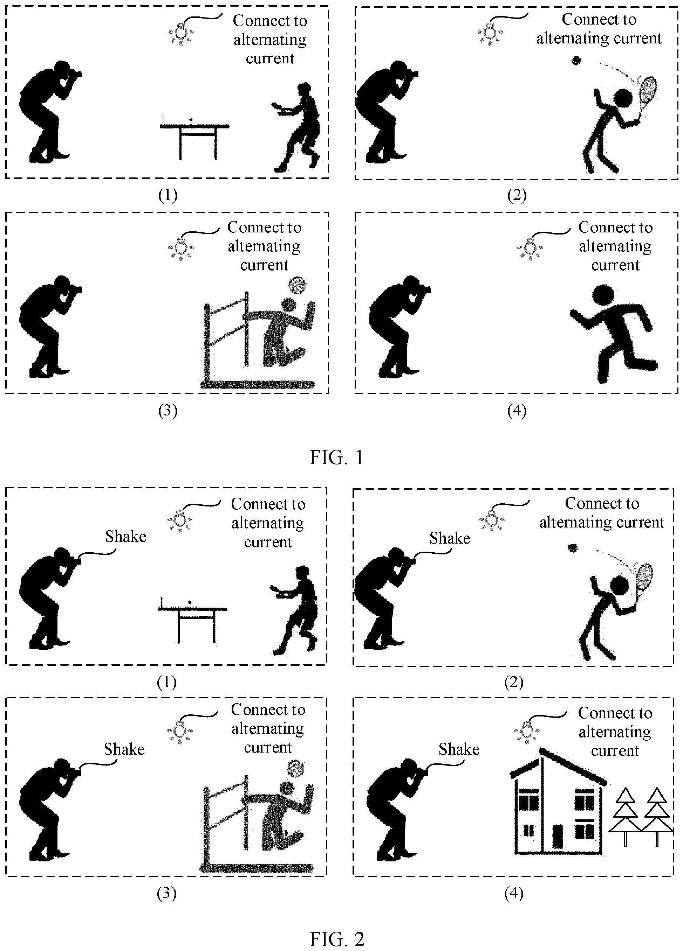

FIG. 1 is a schematic diagram of an example of an application scenario.

For example, lamps in (1) in FIG. 1 to (4) in FIG. 1 are connected to alternating currents.

Refer to (1) in FIG. 1. For example, an application scenario of this application is a scenario in which a moving ping-pong ball and/or a moving user are/is shot in an alternating current lighting environment when an image capture device is still.

Refer to (2) in FIG. 1. For example, an application scenario of this application is a scenario in which a moving tennis ball and/or a moving user are/is shot in the alternating current lighting environment when the image capture device is still.

Refer to (3) in FIG. 1. For example, an application scenario of this application is a scenario in which a moving volleyball and/or a moving user are/is shot in the alternating current lighting environment when the image capture device is still.

Refer to (4) in FIG. 1. For example, an application scenario of this application is a scenario in which a running user is shot in the alternating current lighting environment when the image capture device is still.

It should be understood that FIG. 1 is merely an example of an application scenario of this application. The application scenario of this application may include a scenario in which various moving objects are shot in the alternating current lighting environment when the image capture device is still.

FIG. 2 is a schematic diagram of an example of an application scenario.

For example, lamps in (1) in FIG. 2 to (4) in FIG. 2 are connected to alternating currents, and image capture devices in (1) in FIG. 2 to (4) in FIG. 2 shake.

Refer to (1) in FIG. 2. For example, an application scenario of this application is a scenario in which a moving ping-pong ball and/or a moving user are/is shot in an alternating current lighting environment when the image capture device shakes.

Refer to (2) in FIG. 2. For example, an application scenario of this application is a scenario in which a moving tennis ball and/or a moving user are/is shot in the alternating current lighting environment when the image capture device shakes.

Refer to (3) in FIG. 2. For example, an application scenario of this application is a scenario in which a moving volleyball and/or a moving user are/is shot in the alternating current lighting environment when the image capture device shakes.

Refer to (4) in FIG. 2. For example, an application scenario of this application is a scenario in which a house is shot in the alternating current lighting environment when the image capture device shakes.

It should be understood that FIG. 2 is merely an example of an application scenario of this application. The application scenario of this application may include a scenario in which various moving objects and/or static objects are shot in the alternating current lighting environment when the image capture device shakes.

For example, a scene in which a relative moving speed between a shot object and the image capture device is greater than a relative moving speed threshold may be referred to as a motion scene. The relative moving speed threshold may be set based on a requirement. This is not limited in this application. In other words, an application scenario of this application may include various scenarios in which motion scenes are shot in the alternating current lighting environment.

For example, the image capture device may be any device whose image sensor working mode is a rolling shutter (rolling shutter). Optionally, the image capture device may include any device, for example, a mobile phone, a tablet computer (pad), a camera, a video camera, or the like whose image sensor is CMOS (Complementary Metal Oxide Semiconductor, complementary metal oxide semiconductor). This is not limited in this application.

For example, frequencies of alternating currents in different regions are different. A frequency of an alternating current is not limited in this application.

For example, in this application, it is considered that in the alternating current lighting environment, when shooting is performed for a motion scene, in an image shot with short exposure duration and a stripe, a low-luminance region is underexposed and details are lost, and a high-luminance region has details; and in an image shot with long exposure duration, a high-luminance region is overexposed and details are lost, and a low-luminance region has details. Therefore, in this application, an image processing model that has a stripe removal capability and an image fusion capability may be pre-trained. An image with long exposure duration and an image with short exposure duration are shot in actual application, and then are processed by using the pre-trained image processing model, to obtain an image with details and no stripe in each region.

For example, when shooting is performed for a motion scene, an image shot with long exposure duration may be a clear image or a blurred image. Further, in this application, an image processing model that has a deblurring capability, the stripe removal capability, and the image fusion capability may be pre-trained. An image with long exposure duration and an image with short exposure duration are shot in actual application, and then are processed by using the pre-trained image processing model, to obtain a clear image with details and no stripe in each region. It should be noted that even if the image with long exposure duration is clear, the image with long exposure duration and the image with short exposure duration can be processed by using the image processing model that learns the deblurring capability, the stripe removal capability, and the image fusion capability, to obtain the clear image with details and no stripe in each region. This application is described by using an example in which the image processing model that has the deblurring capability, the stripe removal capability, and the image fusion capability is trained. For example, when an image meets a definition condition, it may be determined that the image is clear; or when the image does not meet the definition condition, it may be determined that the image is blurred. The definition condition may be set based on a requirement. This is not limited in this application. For example, the definition condition may be that an edge width of the shot object is less than or equal to a preset width threshold. The preset width threshold may be set based on a requirement, for example, three pixels. This is not limited in this application.

In a possible manner, in actual application, the long exposure duration may be set to first preset exposure duration T1, and the short exposure duration may be set to second preset exposure duration T2. T1=N1*T, where T is an energy period of an alternating current, and N1 is a positive integer. T2=M1*T, where M1 is a decimal between 0 and 1. In this case, an image shot based on the long exposure duration is a blurred image without a stripe (or a clear image without a stripe), and an image shot based on the short exposure duration is a clear image with a stripe.

For example, the energy period of the alternating current is a period in which an absolute value of an alternating current amplitude changes, and is equal to half of an alternating current period. For example, a domestic alternating current frequency is 50 Hz, an alternating current period is 20 ms, and an energy period of the alternating current is 10 ms.

For example, the image processing model may include a first image processing model. The first image processing model may be pre-trained, and then the first image processing model is used to process a blurred image without a stripe (or a clear image without a stripe) and a clear image with a stripe, to obtain a clear image with details and no stripe in each region.

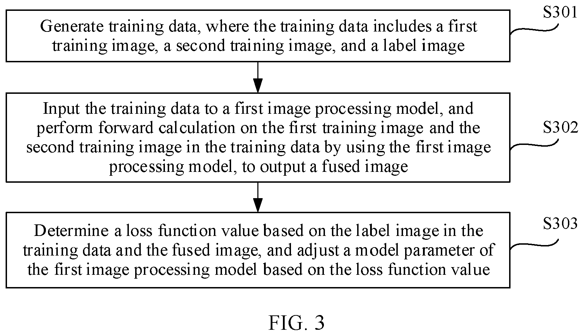

The following describes an example of a training process of the first image processing model. FIG. 3 is a schematic diagram of an example of the training process.

S301: Generate training data, where the training data includes a first training image, a second training image, and a label image.

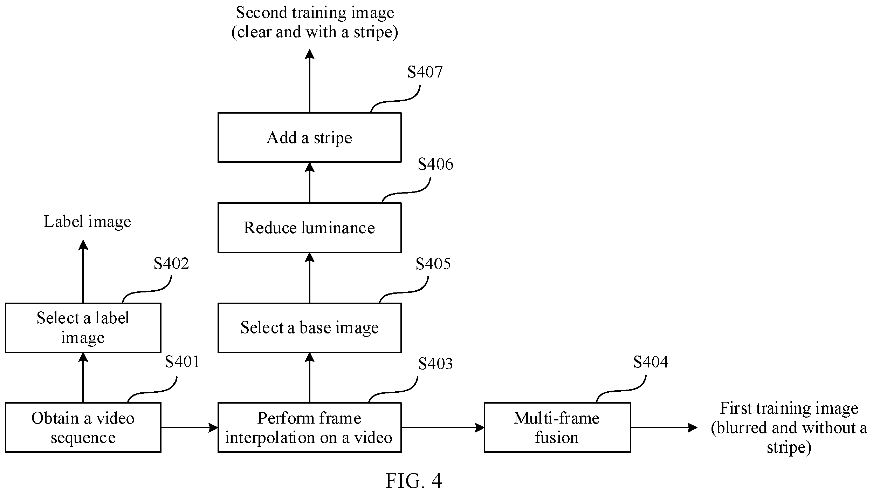

FIG. 4 is a schematic diagram of an example of a data generation process.

For example, there may be a plurality of groups of training data, and each group of training data includes a frame of first training image, a frame of second training image, and a frame of label image.

Refer to FIG. 4. For example, for a process of generating the training data, refer to the following steps S401 to S406.

S401: Obtain a video sequence.

In a possible manner, when an image capture device is still, a moving shot object is shot, to obtain a video sequence. Each frame of image in the video sequence is a clear image without a stripe. For example, different motion processes of a same shot object may be shot, to obtain a plurality of groups of video sequences. For example, motion processes of different shot objects may be shot, to obtain a plurality of groups of video sequences.

In a possible manner, when the image capture device shakes, a moving shot object is shot, to obtain a video sequence. Each frame of image in the video sequence is a clear image without a stripe. For example, different motion processes of a same shot object may be shot, to obtain a plurality of groups of video sequences. For example, motion processes of different shot objects may be shot, to obtain a plurality of groups of video sequences.

In a possible manner, when the image capture device shakes, a static shot object is shot, to obtain a video sequence. Each frame of image in the video sequence is a clear image without a stripe. For example, different static shot objects may be shot, to obtain a plurality of groups of video sequences.

It should be noted that the video sequence includes an image obtained through high dynamic range imaging. For example, in a shooting process, the image obtained through high dynamic range imaging may be obtained in a manner, for example, switching a shooting environment from indoor to outdoor.

It should be noted that in this embodiment of this application, shooting device parameters such as a moving speed of the shot object, a shaking speed of the image capture device, and exposure duration of the image capture device are not limited, provided that each frame of image in the obtained video sequence is a clear image without a stripe.

It should be understood that, in this application, shooting may be performed for various motion scenes to obtain the video sequence. Images in the video sequence are clear images without a stripe, and the video sequence includes an image obtained through high dynamic range imaging.

Then, one group of video sequence may be selected from the plurality of groups of video sequences, and training data is generated based on the selected video sequence. For details, refer to S402 to S406.

S402: Select a label image from the video sequence.

For example, a frame of image may be selected from the video sequence as the label image.

For example, a frame of image may be selected from the video sequence as the label image according to a preset rule. The preset rule may be set based on a requirement, for example, random selection or sequential selection. This is not limited in this application.

S403: Perform frame interpolation on the video sequence.

For example, a plurality of frames of images in the video sequence may be fused to generate a blurred first training image without a stripe. For example, in two adjacent frames of images in a video sequence shot at a specific frame rate (for example, 30 fps or 60 fps), displacement of a moving shot object is greater than preset displacement. As a result, discontinuous ghosting occurs on the moving shot object in an image obtained through fusion of the plurality of frames. Therefore, frame interpolation may be performed on the video sequence first, and then K (K is a positive integer) frames of images are selected from the interpolated video sequence for fusion, to ensure that ghosting of the moving shot object in the image obtained through fusion of the plurality of frames is continuous. For example, the preset displacement may be set based on a requirement, for example, one pixel (pixel). This is not limited in this application.

For example, frame interpolation may be performed on the video sequence with a target that displacement of the moving shot object in two adjacent frames of images obtained through frame interpolation is less than or equal to the preset displacement.

For example, there may be a plurality of frame interpolation methods, such as a quadratic frame interpolation method and a SepConv (sequence convolution) network frame interpolation method. This is not limited in this application. For details, refer to an existing mature frame interpolation method to perform frame interpolation on the video sequence.

S404: Select the K frames of images from the interpolated video sequence for fusion.

For example, a quantity K of frames of images to be fused may be determined based on a requirement for a blur degree of the first training image. For example, a higher blur degree indicates a larger value of K that needs to be determined, and a lower blur degree indicates a smaller value of K that needs to be determined.

For example, the K frames of images may be selected from the interpolated video sequence based on the label image in the video sequence to perform multi-frame fusion. For example, k1 consecutive frames of images before the label image, the label image, and k2 consecutive frames of images after the label image may be selected as images used for multi-frame fusion. Both k1 and k2 are integers, and k1+k2=K-1. Optionally, k1=k2=(K-1)/2. In other words, K-1 frames of images may be selected from images before the label image, and the K-1 frames of images and the label image form K frames of images. Alternatively, K-1 frames of images may be selected from images after the label image, and the K-1 frames of images and the label image form K frames of images. Alternatively, K-1 frames of images may be selected from images before the label image and images after the label image, and the K-1 frames of images and the label image form K frames of images.

It should be understood that a manner of selecting the K frames of images from the interpolated video sequence is not limited in this application.

For example, after the K frames of images are selected, weighted calculation may be performed on the K frames of images to obtain a frame of image, that is, the first training image. For example, weighted calculation may be performed on pixel values of pixels corresponding to the K frames of images, to obtain a weighted calculation result of a pixel value of each pixel. The weighted calculation result of the pixel value of each pixel is the pixel value of each pixel in the first training image.

For example, weights of the K frames of images may be set based on a requirement. For example, the weights of the K frames of images are the same. For another example, in the K frames of images, a weight corresponding to a frame that is closer to the label image is larger, and a weight corresponding to a frame that is farther away from the label image is smaller.

For example, when the video sequence is obtained by shooting a moving shot object and a static shot object when the image capture device is still, in the generated first training image, the moving shot object is blurred, and the static shot object is clear. In other words, the first training image is a locally blurred image without a stripe.

For example, local blur may mean that an edge width of only the moving shot object in the image is greater than a preset width threshold, and an edge width of the static shot object in the image is less than or equal to the preset width threshold.

For example, when the video sequence is obtained by shooting a moving shot object and a static shot object when the image capture device shakes, in the generated first training image, both the moving shot object and the static shot object are blurred. In other words, the first training image is a globally blurred image without a stripe. Global blur may mean that edge widths of all shot objects in the image are greater than the preset width threshold.

For example, when the video sequence is obtained by shooting a static shot object when the image capture device shakes, in the generated first training image, the static shot object is blurred. In other words, the first training image is a globally blurred image without a stripe.

In this way, a plurality of frames of blurred first training images without a stripe may be obtained.

The plurality of frames of first training images may include a locally blurred image and/or a globally blurred image.

S405: Select a base image from the interpolated video sequence.

For example, a frame of image may be selected from the interpolated video sequence as the base image, and then the second training image is generated based on the base image.

For example, an image that is at an interval of L (L is an integer greater than or equal to 0) frames from the label image may be selected as the base image. For example, L may be determined based on a shooting time interval between an image shot based on the long exposure duration and an image shot based on the short exposure duration in actual application. For example, if the shooting time interval is 10 ms, L may be equal to 1. For another example, if the shooting time interval is 20 ms, L may be equal to 2.

For example, when L is 0, the label image is selected as the base image.

In a possible manner, when L is greater than 0, an image that is at an interval of L frames from the label image may be selected from images before the label image as the base image.

In a possible manner, when L is greater than 0, an image that is at an interval of L frames from the label image may be selected from images after the label image as the base image.

S406: Reduce luminance of the base image.

In a possible manner, the base image may be processed by using an inverse gamma curve, to reduce the luminance of the base image.

In a possible manner, a ratio of first preset exposure duration to second preset exposure duration may be determined. A pixel value of each pixel in the base image is divided by the ratio, to reduce the luminance of the base image.

S407: Add a stripe to the base image after the luminance is reduced.

For example, a stripe may be added, based on a waveform of an alternating current, to the base image whose luminance is reduced. For example, the alternating current is a sine wave.

For example, a plurality of frequencies may be set for the alternating current, to simulate frequency differences of alternating currents in different regions. For example, the plurality of frequencies set for the alternating current may include a frequency of an alternating current in a target shooting scene.

For example, a plurality of different amplitudes may be set for the alternating current, to simulate a difference in a stripe luminance contrast caused by a difference in light intensity in different scenes.

For example, a plurality of different phases may be set for the alternating current. A phase of the alternating current may be any degree from 0° to 360° (the phase may be 0° or 360°), to simulate a case in which stripes at an edge are complete and/or incomplete stripes in an image shot based on the short exposure duration in actual application.

In this way, a plurality of sine waves may be obtained. The sine waves have different frequencies and/or amplitudes and/or phases. Each sine wave may be used to generate an image with a stripe. The following uses an example in which one sine wave is used to generate a stripe image.

For example, it may be determined, based on a maximum luminance value and/or a minimum luminance value of the base image, whether to shift the amplitude of the sine wave, to avoid overexposure or underexposure of the base image to which the stripe is added. For example, when the maximum luminance value is greater than or equal to a first preset luminance value, the amplitude of the sine wave may not be shifted. When the maximum luminance value is less than the first preset luminance value, the amplitude of the sine wave may be shifted by a first preset amplitude value. The first preset amplitude value is a positive number, and may be set based on the maximum luminance value of the base image. This is not limited in this application. For example, when the minimum luminance value is less than or equal to a second preset luminance value, the amplitude of the sine wave may not be shifted. When the minimum luminance value is greater than the second preset luminance value, the amplitude of the sine wave may be shifted by a second preset amplitude. The second preset amplitude is a negative number, and may be set based on the minimum luminance value of the base image. This is not limited in this application. The first preset luminance value is greater than the second preset luminance value, and absolute values of the first preset amplitude and the second preset amplitude may be the same, or may be different. This is not limited in this application.

For example, the stripe image may be generated based on a size of the base image and a frequency, an amplitude, and a phase of the sine wave.

In a possible manner, a quantity M (M is a positive integer) of pixel rows for generating a complete periodic stripe may be determined, and then a stripe image with P1 (P1 is a positive integer or a positive decimal, where P1=H/M) periodic stripes is generated based on the size (W*H, where W is a width of the base image, and H is a height of the base image) of the base image, M, and the frequency, the amplitude, and the phase of the sine wave. For example, when M is less than or equal to the height of the base image, P1 is an integer or a decimal greater than or equal to 1. When M is greater than the height of the base image, P1 is a positive decimal less than 1. In this way, a horizontal stripe image can be generated.

For example, a quantity N (N is a positive integer) of pixel columns for generating a complete periodic stripe may be determined, and then a stripe image with P2 (P2 is a positive integer or a positive decimal, where P2=W/N) periodic stripes is generated based on the size (W*H, where W is the width of the base image, and H is the height of the base image) of the base image, N, and the frequency, the amplitude, and the phase of the sine wave. For example, when N is less than or equal to the width of the base image, P2 is an integer or a decimal greater than or equal to 1. When N is greater than the width of the base image, P2 is a positive decimal less than 1. In this way, a vertical stripe image can be generated.

For example, the stripe image may be superimposed on the base image whose luminance is reduced, to obtain the second training image. For example, the horizontal stripe image may be superimposed on the base image whose luminance is reduced, to obtain a second training image with a horizontal stripe. For example, the vertical stripe image may be superimposed on the base image whose luminance is reduced, to obtain a second training image with a vertical stripe.

In this way, a plurality of frames of clear second training images with stripes may be obtained. Different second training images have different quantities of stripes, and/or different stripe directions, and/or different stripe luminance contrasts.

For example, a frame of second training image in the plurality of frames of second training images, a frame of first training image in the plurality of frames of first training images, and the label image may be used as one group of training images, to obtain a plurality of groups of training data.

For example, another frame of image may be selected from images that are not selected as the label image in the video sequence as the label image, and then a plurality of groups of training data are generated based on the foregoing S402 to S406.

For example, when a quantity of label images selected from a group of video sequence is greater than a preset quantity of frames and is less than or equal to a total quantity of frames of the video sequence, another group of video sequence may be selected from a plurality of groups of video sequences to generate the training data. The preset quantity of frames may be set based on a requirement. This is not limited in this application.

It should be noted that the training data may alternatively be generated in another manner. This is not limited in this application.

In a possible manner, two image capture devices may be used (an image capture device 1 and an image capture device 2, and the image capture device 1 and the image capture device 2 have same device parameters) to shoot a video. For example, the image capture device 1 is bound to the image capture device 2, exposure duration of the image capture device 1 is less than exposure duration of the image capture device 2, and an image in a video sequence shot by the image capture device 1 is a clear image without a stripe, and an image in a video sequence shot by the image capture device 2 is a blurred image without a stripe. For example, the image capture device 1 and the image capture device 2 may perform shooting with reference to the foregoing manner, to obtain a video sequence 1 and a video sequence 2 respectively. The image capture device 1 and the image capture device 2 perform shooting synchronously, and other shooting parameters of the image capture device 1 and the image capture device 2 are the same except exposure duration.

For example, an i^{th} (i is a positive integer) frame of image may be selected from the video sequence 1 shot by the image capture device 1 as the label image according to the foregoing method, and an i^{th} frame of image may be selected from the video sequence 2 shot by the image capture device 2 as the first training image.

For example, a k^{th} (k is a positive integer) frame of image may be selected from the video sequence 1 shot by the image capture device 1 as the base image. For example, a distance between k and i is L.

In a possible manner, the image capture device 1 and the image capture device 2 may be used to perform shooting, to correspondingly obtain an image 1 and an image 2. For example, the second training image may be generated by using the image 1 as the label image, the image 2 as the first training image, and the image 1 as the base image.

For example, a group or a batch of training data may be input to the first image processing model each time, to train the first image processing model. The batch of training data includes a plurality of groups of training data. The following uses an example in which a group of training data is input for description.

S302: Input the training data to the first image processing model, and perform forward calculation on the first training image and the second training image in the training data by using the first image processing model, to output a fused image.

For example, after the group of training data is input to the first image processing model, the first image processing model may process a first training image and a second training image in the group of training data, to obtain a frame of image, and output the frame of image. For ease of description, the image output by the first image processing model in a training process may be referred to as a fused image.

S303: Determine a loss function value based on the label image in the training data and the fused image, and adjust a model parameter of the first image processing model based on the loss function value.

For example, after outputting the fused image, the first image processing model may substitute the fused image and the label image in the group of training data into a loss function for calculation, to obtain the loss function value. Then, the model parameter of the first image processing model may be adjusted with a target of minimizing the loss function value.

It should be noted that the loss function used for training the first image processing model is not limited in this application.

Then, according to S302 and S303, the first image processing model is trained by using each group of training data, and the first image processing model is not trained until the loss function value is less than a first loss function threshold, or a quantity of training times reaches a first training frequency threshold, or effect of the first image processing model meets a first preset effect condition. For example, the first loss function threshold, the first training frequency threshold, and the first preset effect condition may all be set based on requirements. This is not limited in this application.

In this way, the first image processing model can learn a blur removal capability, a stripe removal capability, and an image fusion capability.

In a possible manner, in actual application, the long exposure duration may be set to third preset exposure duration T3, and the short exposure duration may be set to fourth preset exposure duration T4. T3=N2*T, where T is an energy period of an alternating current, and N2 is a decimal greater than 1. T4=M2*T, where M2 is a decimal between 0 and 1. When N2 is a decimal greater than 1, an energy period of a sine wave in an exposure process is incomplete, and therefore, the first image has a stripe. In this case, the shot first image is a blurred image with a stripe (or a clear image with a stripe), and the second image is a clear image with a stripe.

In a possible manner, in actual application, the long exposure duration may be set to fifth preset exposure duration T5, and the short exposure duration may be set to sixth preset exposure duration T6. T5=N3*T, where T is an energy period of an alternating current, and N3 is a decimal between 0 and 1. T6=M3*T, where M3 is a decimal between 0 and 1, and M3 is less than N3. In this case, the first image is a blurred image with a stripe (or a clear image with a stripe), and the second image is a clear image with a stripe.

For example, the image processing model may include a second image processing model. The second image processing model may be pre-trained, and then the second image processing model is used to process a blurred image with a stripe (or a clear image with a stripe) and a clear image with a stripe, to obtain a clear image with details and no stripe in each region.

The following describes an example of a training process of the second image processing model.

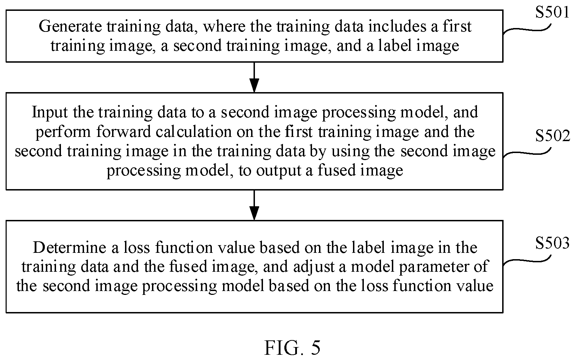

FIG. 5 is a schematic diagram of an example of the training process.

S501: Generate training data, where the training data includes a first training image, a second training image, and a label image.

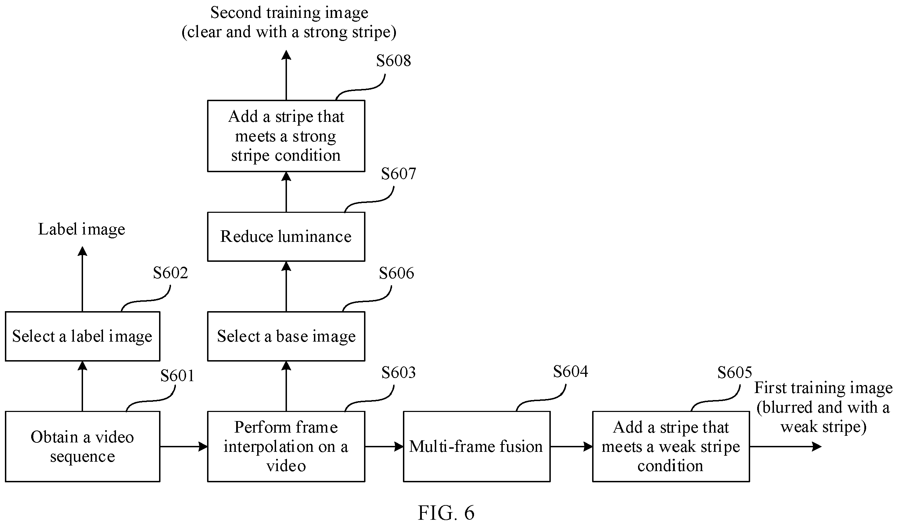

FIG. 6 is a schematic diagram of an example of a data generation process.

For example, there may be a plurality of groups of training data, and each group of training data includes a first training image, a second training image, and a label image.

Refer to FIG. 6. For example, for a process of generating the training data, refer to the following steps S601 to S607.

S601: Obtain a video sequence.

S602: Select a label image from the video sequence.

S603: Perform frame interpolation on the video sequence.

S604: Select the K frames of images from the interpolated video sequence for fusion.

For example, for S601 to S604, refer to the foregoing descriptions of S401 to S404. Details are not described herein again.

S605: Add a stripe that meets a weak stripe condition to an image obtained through fusion.

For example, in S604, a blurred image may be obtained, and then a stripe may be added to the blurred image, to obtain a blurred first training image with a stripe.

For example, longer exposure duration indicates a smaller luminance difference between bright and dark stripes. In other words, a luminance difference between bright and dark stripes in an image shot based on long exposure duration is less than a luminance difference between bright and dark stripes in an image shot based on short exposure duration. For example, a luminance difference between bright and dark stripes may be described by using stripe intensity. A larger luminance difference between bright and dark stripes indicates higher stripe intensity, and a smaller luminance difference between bright and dark stripes indicates lower stripe intensity. For example, the stripe that meets the weak stripe condition may be added to the blurred image. The weak stripe condition is that stripe intensity is less than an intensity threshold. In other words, a weak stripe is added to the blurred image. For example, the intensity threshold may be set based on a requirement. This is not limited in this application.

For example, a plurality of stripes whose intensity is less than the intensity threshold may be added to the blurred image. In this way, a plurality of frames of first training images whose stripe intensity is different may be obtained. For example, for a manner of adding a stripe to the blurred image, refer to the foregoing description of S406. Details are not described herein again.

In this way, a plurality of frames of blurred first training images with weak stripes may be obtained. Different first training images have different quantities of stripes, and/or different stripe directions, and/or different stripe intensity. In addition, the plurality of frames of first training images may include a locally blurred image and/or a globally blurred image.

S606: Select a base image from the interpolated video sequence.

For example, for S606, refer to the foregoing description of S404. Details are not described herein again.

S607: Reduce luminance of the base image.

In a possible manner, the base image may be processed by using an inverse gamma curve, to reduce the luminance of the base image.

In a possible manner, a ratio of third preset exposure duration to fourth preset exposure duration may be determined. A pixel value of each pixel in the base image is divided by the ratio, to reduce the luminance of the base image.

In a possible manner, a ratio of fifth preset exposure duration to sixth preset exposure duration may be determined. A pixel value of each pixel in the base image is divided by the ratio, to reduce the luminance of the base image.

S608: Add a stripe that meets a strong stripe condition to the base image whose luminance is reduced.

For example, the stripe that meets the strong stripe condition may be added to the base image whose luminance is reduced. The strong stripe condition is that stripe intensity is greater than or equal to the intensity threshold. In other words, a strong stripe is added to the base image whose luminance is reduced.

For example, a plurality of stripes whose intensity is greater than or equal to the intensity threshold may be added to the base image whose luminance is reduced. In this way, a plurality of frames of second training images may be obtained. For example, for a manner of adding a stripe to the base image, refer to the foregoing description of S406. Details are not described herein again.

In this way, a plurality of frames of clear second training images with strong stripes may be obtained. Different second training images have different quantities of stripes, and/or different stripe directions, and/or different stripe luminance contrasts.

S502: Input the training data to the second image processing model, and perform forward calculation on the first training image and the second training image in the training data by using the second image processing model, to output a fused image.

S503: Determine a loss function value based on the label image in the training data and the fused image, and adjust a model parameter of the second image processing model based on the loss function value.

For example, for S502 and S503, refer to the foregoing descriptions of S302 and S303. Details are not described herein again.

Then, according to S502 and S503, the second image processing model is trained by using each group of training data, and the second image processing model is not trained until the loss function value is less than a second loss function threshold, or a quantity of training times reaches a second training frequency threshold, or effect of the second image processing model meets a second preset effect condition. For example, the second loss function threshold, the second training frequency threshold, and the second preset effect condition may all be set based on requirements. This is not limited in this application.

In this way, the second image processing model can learn a blur removal capability, a stripe removal capability, and an image fusion capability.

Trained image processing models: the first image processing model and the second image processing model may be obtained by using the foregoing method. Then, the trained first image processing model and the trained second image processing model may be deployed in an image capture device. Further, in actual application, the shot first image and the shot second image may be processed by using the first image processing model or the second image processing model, to obtain a clear image without a stripe.

It should be noted that the training data in S401 and the training data in S601 may be mixed based on a preset proportion, and then an image processing model is trained based on mixed training data. The image processing model is deployed in the image capture device, and an image shot based on long exposure duration and an image shot based on short exposure duration are processed, to obtain a clear image with details and no stripe in each region. The preset proportion may be set based on a requirement. This is not limited in this application.

It should be noted that the training data in S401 and the training data in S601 may be mixed based on the preset proportion, and then stripe marking may be performed on the first training image to generate a mask (mask) image. The first training image, the second training image, and the mask image are used as an input of the image processing model. The image processing model performs forward calculation on the first training image, the second training image, and the mask image, to obtain a fused image. Then, the fused image is compared with the label image, to perform backpropagation on the image processing model. For this, reference may be made to the foregoing descriptions. Details are not described herein again. It should be understood that stripe marking on the first training image may alternatively be performed by using the image processing model. This is not limited in this application.

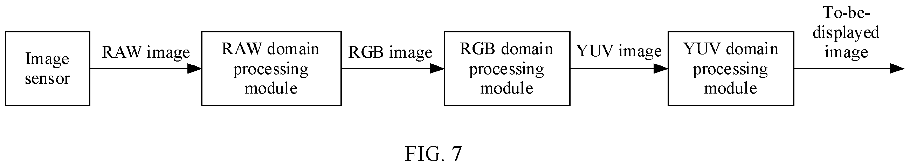

FIG. 7 is a schematic diagram of an example of a processing flow.

Refer to FIG. 7. For example, an image capture device includes an image sensor, a RAW domain processing module, an RGB domain processing module, and a YUV domain processing module. It should be understood that the image capture device shown in FIG. 7 is merely an example of the image capture device, and the image capture device may have more or fewer components than those shown in the figure, may combine two or more components, or may have different component configurations. Various components shown in FIG. 7 may be implemented in hardware including one or more signal processing and/or application-specific integrated circuits, software, or a combination of hardware and software.

For example, after light is incident on the image sensor through a lens, the image sensor may convert a received optical signal into an electrical signal, and output a RAW image to the RAW domain processing module.

Still refer to FIG. 7. For example, after obtaining the RAW image, the RAW domain processing module may perform RAW domain processing (for example, level correction or defect pixel removal) on the RAW image, to obtain an RGB image.

Still refer to FIG. 7. After obtaining the RGB image, the RGB domain processing module may perform RGB domain processing (for example, mosaic removal or white balance adjustment) on the RGB image, to obtain a YUV image.

Still refer to FIG. 7. After obtaining the YUV image, the YUV domain processing module may perform YUV domain processing (for example, gamma correction, sharpening, or color adjustment) on the YUV image, to obtain a to-be-displayed image. Then, the image capture device may display the to-be-displayed image.

In a possible manner, if an image in a video sequence used in a training process is the RAW image, an image processing model obtained through training may be integrated into the RAW domain processing module, or may be used as an independent module and disposed before the RAW domain processing module.

In a possible manner, if the image in the video sequence used in the training process is the RGB image, the image processing model obtained through training may be integrated into the RGB domain processing module, or may be used as an independent module and disposed before the RGB domain processing module.

In a possible manner, if the image in the video sequence used in the training process is the YUV image, the image processing model obtained through training may be integrated into the YUV domain processing module, or may be used as an independent module and disposed before the YUV domain processing module.

In a possible manner, if the image in the video sequence used in the training process is an image on which YUV domain processing is performed, the image processing model obtained through training may be used as an independent module and disposed after the YUV domain processing module.

It should be noted that a first image processing model and a second image processing model may be a whole, or may be two independent parts. When the first image processing model and the second image processing model are two independent parts, the first image processing model and the second image processing model may be deployed in a same position of the image capture device, or may be deployed in different positions of the image capture device. This is not limited in this application.

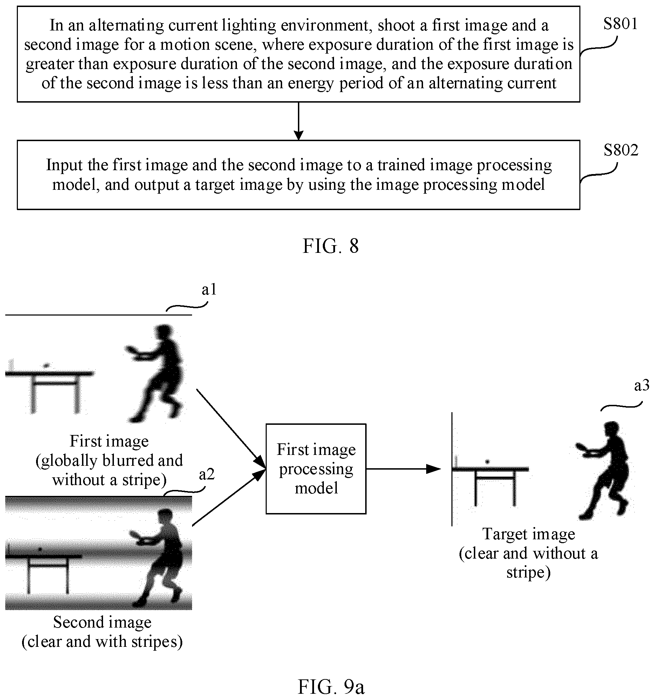

FIG. 8 is a schematic diagram of an example of an image processing flow.

S801: In an alternating current lighting environment, shoot a first image and a second image for a motion scene, where exposure duration of the first image is greater than exposure duration of the second image, and the exposure duration of the second image is less than an energy period of an alternating current.

For example, before shooting is performed in the alternating current lighting environment, a current shooting scene may be detected, to detect whether the current shooting scene is a motion scene. For example, a moving speed of a shot object and a shaking speed of an image capture device may be detected, and then whether the current shooting scene is the motion scene is detected based on the moving speed and the shaking speed.

For example, before shooting is performed, the image capture device is in a preview state, and the image capture device may detect the moving speed of the shot object based on an image shot in the preview state. For example, the image capture device may detect the moving speed of the shot object based on a current frame of image and a previous frame of image. For example, the image capture device may determine a position of the shot object in the current frame of image and a position of the shot object in the previous frame of image, and then determine the moving speed of the shot object based on the position of the shot object in the current frame of image and the position of the shot object in the previous frame of image, and a capture time interval between the current frame of image and the previous frame of image.

For example, before shooting is performed, the image capture device may determine the shaking speed of the image capture device based on data collected by a motion detection sensor (for example, a gyroscope or an acceleration sensor) in the image capture device.

For example, when it is determined, based on the moving speed of the shot object and the shaking speed of the image capture device, that a relative moving speed between the shot object and the image capture device is greater than a relative moving speed threshold, it may be determined that the current shooting scene is the motion scene. When it is determined, based on the moving speed of the shot object and the shaking speed of the image capture device, that the relative moving speed between the shot object and the image capture device is less than or equal to the relative moving speed threshold, it may be determined that the current shooting scene is not the motion scene. The relative moving speed threshold may be set based on a requirement. This is not limited in this application.

For example, when it is detected that the current shooting scenario is the motion scene, the exposure duration for shooting the first image and the exposure duration for shooting the second image may be set based on the moving speed of the shot object and the shaking speed of the image capture device.

In a possible manner, when it is determined, based on the moving speed and the shaking speed, that the relative moving speed between the shot object and the image capture device is less than or equal to a preset relative moving speed, the exposure duration for shooting the first image may be set to first preset exposure duration T1, and the exposure duration for shooting the second image may be set to second preset exposure duration T2. The preset relative moving speed is greater than the relative moving speed threshold, and may be specifically set based on a requirement. This is not limited in this application.

In a possible manner, when it is determined, based on the moving speed and the shaking speed, that the relative moving speed between the shot object and the image capture device is less than or equal to the preset relative moving speed, the exposure duration for shooting the first image may be set to third preset exposure duration T3, and the exposure duration for shooting the second image may be set to fourth preset exposure duration T4.

In a possible manner, when it is determined, based on the moving speed and the shaking speed, that the relative moving speed between the shot object and the image capture device is greater than the preset relative moving speed, the exposure duration for shooting the first image may be set to fifth preset exposure duration T5, and the exposure duration for shooting the second image may be set to sixth preset exposure duration T6.

For example, the exposure duration for shooting the first image is set to the first preset exposure duration T1, and the exposure duration for shooting the second image is set to the second preset exposure duration T2. After the image capture device receives a shooting operation of a user in the alternating current lighting environment, when it is detected that the current shooting scene is the motion scene, in response to the operation of the user and for the motion scene, one time of shooting may be performed based on the first preset exposure duration T1 to obtain the first image, and another time of shooting may be performed based on the second preset exposure duration T2 to obtain the second image.

For example, the exposure duration for shooting the first image is set to the third preset exposure duration T3, and the exposure duration for shooting the second image is set to the fourth preset exposure duration T4. After the image capture device receives the shooting operation of the user in the alternating current lighting environment, when it is detected that the current shooting scene is the motion scene, in response to the operation of the user and for the motion scene, one time of shooting may be performed based on the third preset exposure duration T3 to obtain the first image, and another time of shooting may be performed based on the fourth preset exposure duration T4 to obtain the second image.

For example, the exposure duration for shooting the first image is set to the fifth preset exposure duration T5, and the exposure duration for shooting the second image is set to the sixth preset exposure duration T6. After the image capture device receives the shooting operation of the user in the alternating current lighting environment, when it is detected that the current shooting scene is the motion scene, in response to the operation of the user and for the motion scene, one time of shooting may be performed based on the fifth preset exposure duration T5 to obtain the first image, and another time of shooting may be performed based on the sixth preset exposure duration T6 to obtain the second image.

In a possible manner, the first image and the second image may be shot by using a same image capture device. A shooting time interval between the first image and the second image is less than preset duration. The preset duration may be determined based on the moving speed of the moving shot object and/or the shaking speed of the image capture device. This is not limited in this application. Optionally, the first image and the second image may be two consecutive frames of images.

For example, the first image may be shot first, and then the second image may be shot. Alternatively, the second image may be shot first, and then the first image may be shot. This is not limited in this application.

In a possible manner, two image capture devices may be used to simultaneously shoot the first image and the second image. In this case, after the first image and the second image are obtained, because shooting parameters of the two image capture devices are different, the first image and the second image may be calibrated, for example, colors and luminance of the first image and the second image are calibrated.

S802: Input the first image and the second image to a trained image processing model, and output a target image by using the image processing model.

For example, when the exposure duration of the first image is the first preset exposure duration T1, and the exposure duration of the second image is the second preset exposure duration T2, the trained first image processing model may be selected to process the first image and the second image. For example, the first image processing model learns a stripe removal capability, a deblurring capability, and an image fusion capability. After the first image and the second image are input to the first image processing model for processing, the first image processing model may perform processing such as stripe removal, deblurring, and image fusion, to obtain and output a clear target image without a stripe. In addition, in a fusion process, a region with good image quality in an image is selected for fusion. A low-luminance region in the second image is underexposed and details are lost, and a high-luminance region in the second image has details. A high-luminance region in the first image is overexposed and details are lost, and a low-luminance region in the first image has details. Therefore, the low-luminance region in the first image and the high-luminance region in the second image are selected for fusion, so that each region of the target image obtained through fusion has details, and a dynamic luminance range (in other words, a bright-dark difference of the image) of the target image can be extended.

FIG. 9a is a schematic diagram of an example of an image processing process.

Refer to FIG. 9a. For example, in FIG. 9a, a1 is the first image, the first image is a globally blurred image without a stripe, a2 is the second image, the second image is a clear image with stripes, and a1 and a2 are input to the first image processing model. The first image processing model processes a1 and a2, and outputs a target image a3, where a3 is a clear image without a stripe.

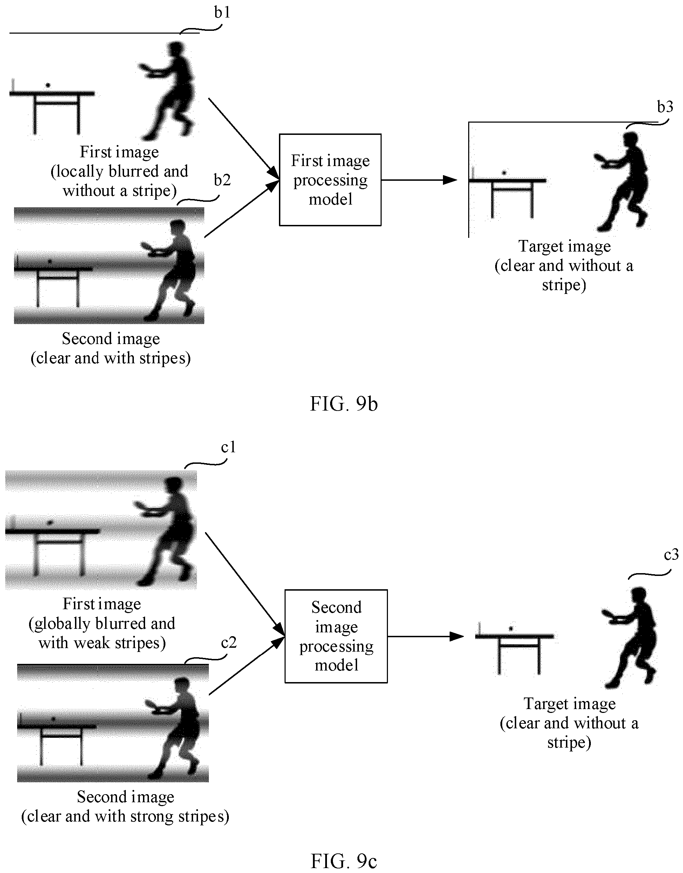

FIG. 9b is a schematic diagram of an example of an image processing process.

Refer to FIG. 9b. For example, in FIG. 9b, b 1 is the first image, the first image is a locally blurred image without a stripe, b2 is the second image, the second image is a clear image with stripes, and b1 and b2 are input to the first image processing model. The first image processing model processes b 1 and b2, and outputs a target image b3, where b3 is a clear image without a stripe. For example, when exposure duration corresponding to the first image is the third preset exposure duration T3, and exposure duration corresponding to the second image is the fourth preset exposure duration T4, or when exposure duration corresponding to the first image is the fifth preset exposure duration T5, and exposure duration corresponding to the second image is the sixth preset exposure duration T6, a trained second image processing model may be selected to process the first image and the second image. For example, the second image processing model learns the stripe removal capability, the deblurring capability. After the first image and the second image are input to the second image processing model for processing, the second image processing model may perform processing such as stripe removal, deblurring, and image fusion, to output a clear image without a stripe. The second image processing model may perform processing such as stripe removal, deblurring, and image fusion, to output a clear image without a stripe. In this way, the obtained target image is a clear image without a stripe, each region has details, and the luminance dynamic range is expandable.

FIG. 9c is a schematic diagram of an example of an image processing process.

Refer to FIG. 9c. For example, in FIG. 9c, c1 is the first image, the first image is a globally blurred image with weak stripes, c2 is the second image, the second image is a clear image with strong stripes, and c1 and c2 are input to the second image processing model. The second image processing model processes c1 and c2, and outputs a target image c3, where c3 is a clear image without a stripe.

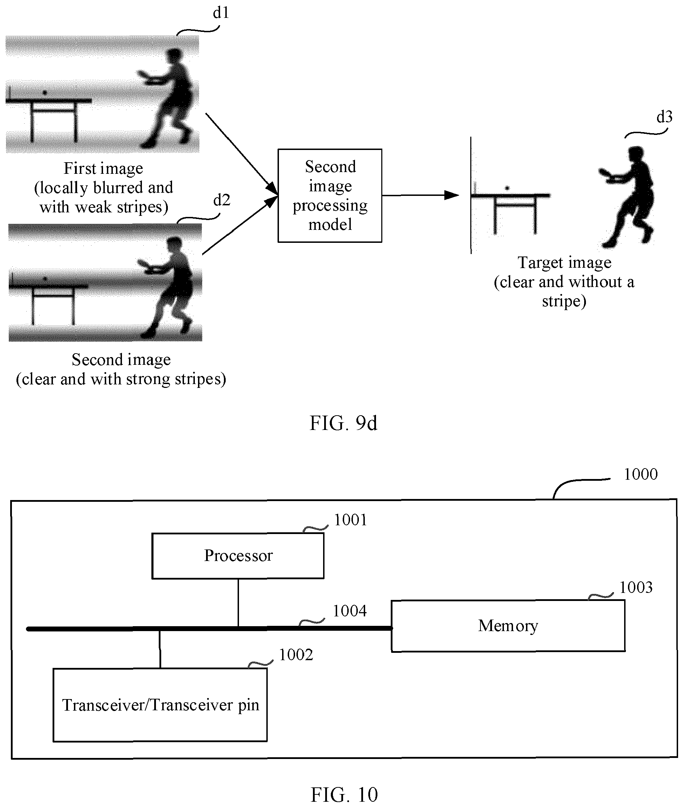

FIG. 9d is a schematic diagram of an example of an image processing process.

Refer to FIG. 9d. For example, in FIG. 9d, d1 is the first image, the first image is a locally blurred image with weak stripes, d2 is the second image, the second image is a clear image with strong stripes, and d1 and d2 are input to the second image processing model. The second image processing model processes d1 and d2, and outputs a target image d3, where d3 is a clear image without a stripe.

In an example, FIG. 10 is a schematic block diagram of an apparatus 1000 according to an embodiment of this application. The apparatus 1000 may include a processor 1001 and a transceiver/transceiver pin 1002, and optionally, further includes a memory 1003.

Components of the apparatus 1000 are coupled together by using a bus 1004. In addition to a data bus, the bus 1004 further includes a power bus, a control bus, and a status signal bus. However, for clear description, various buses are referred to as the bus 1004 in the figure.

Optionally, the memory 1003 may be configured to store instructions in the foregoing method embodiments. The processor 1001 may be configured to: execute the instructions in the memory 1003, control a receive pin to receive a signal, and control a transmit pin to send a signal.

The apparatus 1000 may be the electronic device or a chip of the electronic device in the foregoing method embodiments.

All related content of the steps in the foregoing method embodiments may be cited in function descriptions of the corresponding functional modules. Details are not described herein again.

This embodiment further provides a computer storage medium. The computer storage medium stores computer instructions. When the computer instructions are run on an electronic device, the electronic device is enabled to perform the foregoing related method steps, to implement the image processing method and/or the model training method in the foregoing embodiments.

This embodiment further provides a computer program product. When the computer program product runs on a computer, the computer is enabled to perform the foregoing related steps, to implement the image processing method and/or the model training method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the image processing method and/or the model training method in the foregoing method embodiments.

The electronic device, the computer storage medium, the computer program product, or the chip provided in embodiments may be configured to perform the corresponding method provided above. Therefore, for beneficial effect that can be achieved, refer to beneficial effect of the corresponding method provided above. Details are not described herein again.

Based on the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form. The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or a special-purpose computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. An image processing method, wherein the method comprises:
shooting a first image and a second image for a motion scene in an alternating current lighting environment, wherein exposure duration of the first image is greater than exposure duration of the second image, and the exposure duration of the second image is less than an energy period of an alternating current; and
inputting the first image and the second image to a trained image processing model, and outputting a target image by using the image processing model.

2. The method according to claim 1, wherein the method further comprises:
detecting a moving speed of a shot object and a shaking speed of an image capture device; and
detecting, based on the moving speed and the shaking speed, whether a current shooting scene is the motion scene.

3. The method according to claim 2, wherein the shooting a first image and a second image for a motion scene comprises:
when it is determined, based on the moving speed and the shaking speed, that a relative moving speed between the shot object and the image capture device is less than or equal to a preset relative moving speed, for the motion scene, shooting the first image based on first preset exposure duration and shooting the second image based on second preset exposure duration, wherein
the first preset exposure duration is N1 times the energy period, the second preset exposure duration is M1 times the energy period, N1 is a positive integer, and M1 is a decimal between 0 and 1.

4. The method according to claim 2, wherein the shooting a first image and a second image for a motion scene comprises:
when it is determined, based on the moving speed and the shaking speed, that a relative moving speed between the shot object and the image capture device is less than or equal to a preset relative moving speed, for the motion scene, shooting the first image based on third preset exposure duration and shooting the second image based on fourth preset exposure duration, wherein
the third preset exposure duration is N2 times the energy period, the fourth preset exposure duration is M2 times the energy period, N2 is a decimal greater than 1, and M2 is a decimal between 0 and 1.

5. The method according to any one of claims 2 to 4, wherein the shooting a first image and a second image for a motion scene comprises:
when it is determined, based on the moving speed and the shaking speed, that the relative moving speed between the shot object and the image capture device is greater than the preset relative moving speed, shooting the first image based on fifth preset exposure duration and shooting the second image based on sixth preset exposure duration, wherein
the fifth preset exposure duration is N3 times the energy period, the sixth preset exposure duration is M3 times the energy period, and both N3 and M3 are decimals between 0 and 1.

6. The method according to claim 3, wherein
the image processing model is obtained through training based on a first training image and a second training image, the second training image has a stripe (banding), and luminance of the first training image is greater than luminance of the second training image.

7. The method according to claim 6, wherein the method further comprises:
obtaining a video sequence, wherein the video sequence is obtained through shooting for the motion scene, the video sequence comprises an image obtained through high dynamic range imaging, and an image in the video sequence has no stripe;
selecting a frame of image from the video sequence as a label image;
performing frame interpolation on the video sequence, and selecting, based on the label image, K frames of images from the interpolated video sequence for fusion, to obtain the first training image; and
selecting a frame of image from the interpolated video sequence as a base image, reducing luminance of the base image, and adding a stripe to the base image whose luminance is reduced, to obtain the second training image.

8. The method according to claim 4 or 5, wherein
the image processing model is obtained through training based on a first training image and a second training image, wherein both the first training image and the second training image have stripes, stripe intensity of the first training image is less than stripe intensity of the second training image, and luminance of the first training image is greater than luminance of the second training image.

9. The method according to claim 8, wherein the method further comprises:
obtaining a video sequence, wherein the video sequence is obtained through shooting for the motion scene, the video sequence comprises an image obtained through high dynamic range imaging, and an image in the video sequence has no stripe;
selecting a frame of image from the video sequence as a label image;
performing frame interpolation on the video sequence, selecting, based on the label image, K frames of images from the interpolated video sequence for fusion, and adding a stripe that meets a weak stripe condition to an image obtained through fusion, to obtain the first training image; and
selecting a frame of image from the interpolated video sequence as a base image, reducing luminance of the base image, and adding a stripe that meets a strong stripe condition to the base image whose luminance is reduced, to obtain the second training image.

10. The method according to any one of claims 1 to 9, wherein
the first image and the second image are images shot by a same image capture device, and a shooting time interval between the first image and the second image is less than preset duration; or
the first image and the second image are images shot by different image capture devices, and shooting start time of the first image and shooting start time of the second image are the same.

11. A model training method, wherein the method comprises:
generating training data, wherein the training data comprises a first training image, a second training image, and a label image, the second training image has a stripe (banding), and luminance of the first training image is greater than luminance of the second training image;
inputting the training data to an image processing model, performing forward calculation on the first training image and the second training image in the training data by using the image processing model, and outputting a fused image; and
calculating a loss function value based on the fused image and the label image in the training data, and adjusting a model parameter of the image processing model based on the loss function value.

12. The method according to claim 11, wherein the generating training data comprises:
obtaining a video sequence, wherein the video sequence is obtained through shooting for a motion scene, the video sequence comprises an image obtained through high dynamic range imaging, and an image in the video sequence has no stripe;
selecting a frame of image from the video sequence as the label image;
performing frame interpolation on the video sequence, and selecting, based on the label image, K frames of images from the interpolated video sequence for fusion, to obtain the first training image; and
selecting a frame of image from the interpolated video sequence as a base image, reducing luminance of the base image, and adding a stripe to the base image whose luminance is reduced, to obtain the second training image.

13. The method according to claim 11, wherein the generating training data comprises:
obtaining a video sequence, wherein the video sequence is obtained through shooting for a motion scene, the video sequence comprises an image obtained through high dynamic range imaging, and an image in the video sequence has no stripe;
selecting a frame of image from the video sequence as the label image;
performing frame interpolation on the video sequence, selecting, based on the label image, K frames of images from the interpolated video sequence for fusion, and adding a stripe that meets a weak stripe condition to an image obtained through fusion, to obtain the first training image; and
selecting a frame of image from the interpolated video sequence as a base image, reducing luminance of the base image, and adding a stripe that meets a strong stripe condition to the base image whose luminance is reduced, to obtain the second training image.

14. The method according to claim 13, wherein
the weak stripe condition comprises: stripe intensity is less than an intensity threshold; and
the strong stripe condition comprises: the stripe intensity is greater than or equal to the intensity threshold.

15. An image capture device, configured to perform the method according to any one of claims 1 to 10.

16. An electronic device, comprising:
a memory and a processor, wherein the memory is coupled to the processor; and
the memory stores program instructions, and when the program instructions are executed by the processor, the electronic device is enabled to perform the image processing method according to any one of claims 1 to 10.

17. An electronic device, comprising:
a memory and a processor, wherein the memory is coupled to the processor; and
the memory stores program instructions, and when the program instructions are executed by the processor, the electronic device is enabled to perform the model training method according to any one of claims 11 to 14.

18. A chip, comprising one or more interface circuits and one or more processors, wherein the interface circuit is configured to receive a signal from a memory of an electronic device, and send the signal to the processor; the signal comprises computer instructions stored in the memory; and when the processor executes the computer instructions, the electronic device is enabled to perform the image processing method according to any one of claims 1 to 10.

19. A chip, comprising one or more interface circuits and one or more processors, wherein the interface circuit is configured to receive a signal from a memory of an electronic device, and send the signal to the processor; the signal comprises computer instructions stored in the memory; and when the processor executes the computer instructions, the electronic device is enabled to perform the model training method according to any one of claims 11 to 14.

20. A computer storage medium, wherein the computer-readable storage medium stores a computer program; and when the computer program is run on a computer or a processor, the computer or the processor is enabled to perform the method according to any one of claims 1 to 14.

21. A computer program product, wherein the computer program product comprises a software program; and when the software program is executed by a computer or a processor, steps in the method according to any one of claims 1 to 14 are performed.
